# EUROPÄISCHE PATENTSCHRIFT

(11) **EP 1 522 510 B1**
(45) Veröffentlichungstag und Bekanntmachung des Hinweises auf die Patenterteilung: **17.05.2006**
(21) Anmeldenummer: 04016709.0
(22) Anmeldetag: 15.07.2004
(51) Int. Cl.: B65G 63/02

(54) **Anordnung zum Verladen von Fahrzeugkarossen**
Arragement for loading vehicle bodies
Agencement pour charger des carrosseries

(30) Priorität: 09.10.2003 DE 10347609
(43) Veröffentlichungstag der Anmeldung: 13.04.2005
(73) Patentinhaber: Dr.Ing. h.c.F. Porsche Aktiengesellschaft, 70435 Stuttgart (DE); UTC Uebach Technologie Consulting GmbH, 57572 Niederfischbach (DE)
(72) Erfinder: Böttcher, Lothar, 04179 Leipzig (DE); Beerhalter, Christoph, 73547 Lorch (DE); Wittenmayer, Günther, 71282 Hemmingen (DE); Wolf, Günther, 74321 Bietigheim (DE); Krause, Claus-Peter, 70736 Fellbach (DE); Uebach, Eckhard, 57258 Freudenberg-Heisberg (DE)

(56) Entgegenhaltungen:
- DE-A1- 3 616 484
- DE-U- 20 220 469
- DE-U- 20 220 470

## Beschreibung

Die Erfindung bezieht sich auf eine Anordnung zum Verladen von Fahrzeugkarossen.

Es ist bereits hinreichend bekannt, fertig montierte Fahrzeuge für einen Weitertransport auf Waggons zu verladen und den Transport per Schienenfahrzeug vorzunehmen. In diesem Fall können die fertig montierten Fahrzeuge auf die Waggons gerollt werden und dort aufgrund ihrer eigenen Dämpfung ohne Gefahr der Verwindung transportiert werden.

Aus dem Gebrauchsmuster DE 202 20 470 U1 ist eine Transporteinrichtung bekannt, auf welcher eine vormontierte Baueinheit eines Fahrzeugs (Karosse) ohne Fahrwerk zwischen entfernt liegenden Produktionsstandorten transportiert werden kann. Eine solche Transporteinrichtung hat den Vorteil, dass Festsetz- und Stützvorrichtungen zwischen dem Grundrahmen der Transporteinrichtung und einer Bodenanlage der vormontierten Karosse einen Transport auf einem Transportfahrzeug wie beispielsweise in Waggons eines Schienenfahrzeuges ermöglichen.

Die Aufgabe der Erfindung besteht darin, eine Anordnung zur Verladung von Fahrzeugkarossen zu schaffen, mit der in einfacher Weise die Fahrzeugkarossen am Ende Ihrer Montage aus dem Fertigungsprozess aufgenommen werden können und für eine Verladung auf ein Transportfahrzeug vorbereitet werden können. Hierzu sind die Karossen auf Ladungsträger zu setzen, wie sie beispielsweise als Transporteinrichtung aus der oben genannten DE 202 20 470 U1.

Die erfindungsgemäße Anordnung wird in den Ansprüchen definiert.

Die mit der Erfindung erzielten Vorteile bestehen im wesentlichen darin, dass die montierten Karossen, welche stetig aus dem Fertigungsprozess zur Verladung bereitstehen, nach ihrer Endabnahme kontinuierlich abgenommen werden und zur Verladung vorbereitet werden, selbst dann, wenn kein Transportfahrzeug für einen endgültigen Abtransport bereitsteht.

Die Nutzung von Ladungsträgern, auf welche die Karossen aufgesetzt werden, stellt vorteilhafterweise sicher, dass die Karossen vor Beschädigungen durch Erschütterungen und Verwindungen auf dem Transportfahrzeug geschützt sind.

Die einzelnen Stationen der Verladeanordnung sind so aufeinander abgestimmt und werden von einer zentralen Steuereinheit überwacht, dass rein automatisierte Prozesse und manuelle Prozesse sich abwechseln und gleichzeitig die Sicherheit für die Personen, die die manuellen Prozesse ausführen, gewährleistet ist. Der Einsatz von Lichtschranken und Sensoren zur Erkennung von Endpositionen und zur Sicherung gefährlicher Bereiche hat den Vorteil, dass automatische Prozesse gestoppt werden, wenn ein anderer Prozess noch nicht abgeschlossen ist und dass ein Warnsignal erfolgt.

Alle Informationen sind an eine Steuereinheit geführt, die die Ausführung der einzelnen Arbeitsschritte überwacht.

Ferner ist es von Vorteil, dass alle Karossen mit einer Identifikationsnummer versehen sind, so dass jederzeit im Steuergerät eine Information darüber vorliegt, welche Karosse gerade verladen wird und auf welchem Platz sie in dem Transportfahrzeug einnimmt. Ebenso ist jeder Waggon mit einer Identifikationsnummer versehen und somit kann jedem Waggon genau die Karosse zugeordnet werden kann, die in ihm eingeladen ist. Das hat den Vorteil, dass beim späteren Entladen des Waggons die exakte Reihenfolge der Karossen für die Zuführung zur weiteren Fertigung eingehalten werden kann.

Die einzelnen Arbeitsabläufe und Arbeitsstationen sollen im Folgenden anhand der Figuren näher erläutert werden.

Es zeigen
- Fig. 1: die Anordnung zur Verladung im schematischen Überblick,
- Fig. 2: die Übergabe der Karossen aus der Fertigungsstraße an eine Stapelstation,
- Fig. 3: eine Ladeeinheit aus zwei Ladungsträgern mit Karossen
- Fig. 4: gestapelte leere Ladungsträger
- Fig. 5: die Funktionsbeschreibung eines Programmschrittes

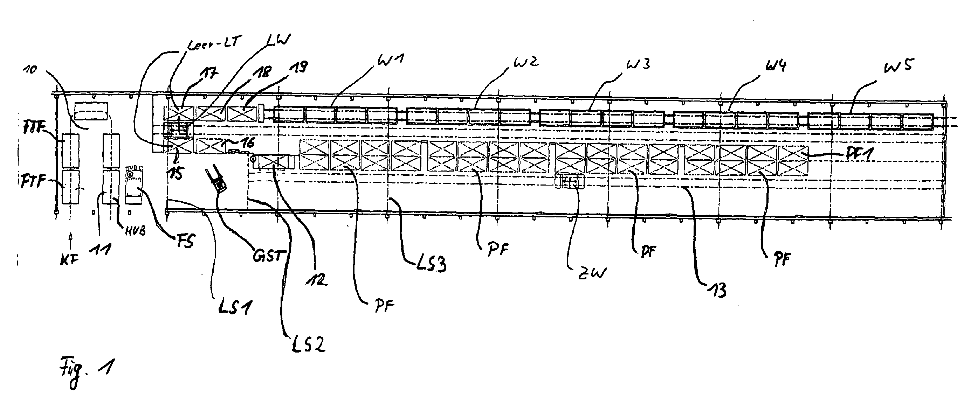

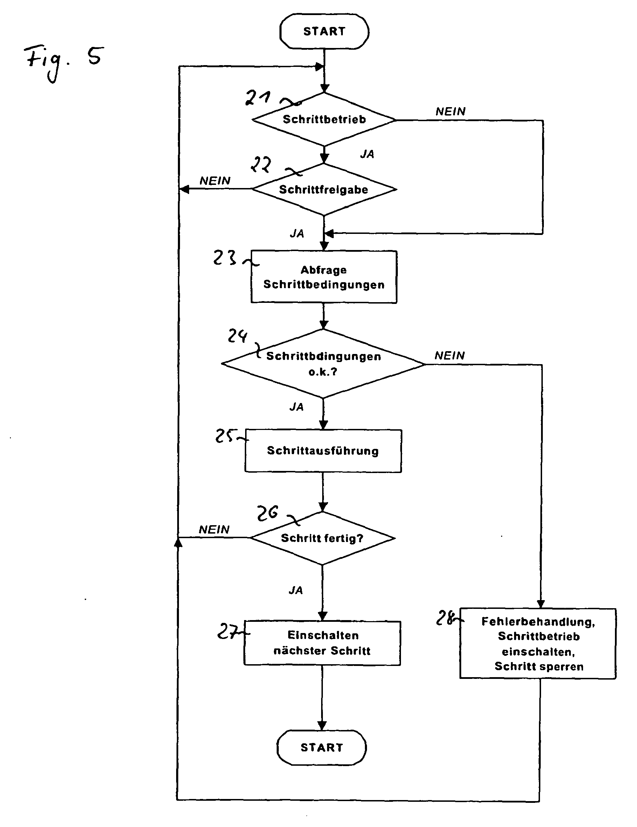

Die Fig. 1 zeigt schematisch die Verladeanordnung im Überblick, wobei auf der linken Seite der Darstellung die fertig montierten Karossen aus der Karossenfertigung KF stetig ausgeschleust werden. Die einzelnen Karossen sitzen auf fahrerlosen Trägerfahrzeugen FTF und werden hier in dem Abschnitt 10 einer Endkontrolle unterzogen. Der Einfachheit halber sind die einzelnen Karossen auf den fahrerlosen Trägerfahrzeugen FTF nicht explizit dargestellt. Tatsächlich wird jedoch auf jedem fahrerlosen Trägerfahrzeug eine fertig montierte Karosse vorhanden sein, die in dieser Endkontrolle 10 ihre Endabnahme erfährt. Ist die zu kontrollierende Karosse in Ordnung, so erfolgt wird von dem Prüfpersonal ein Freigabesignal zur Verladung ausgegeben und das fahrerlose Trägerfahrzeug FTF mit Karosse fährt in die Endposition 11 des Abschnittes 10. Eine nicht dargestellte Steuereinheit, in welcher alle Einzelvorgänge erfasst und gesteuert werden, übernimmt das weitere Vorgehen.
Ein Hubwagen HUB, welcher unter der Endposition 11 angeordnet ist, hebt das ganze System FTF und Karosse soweit an, dass ein nicht dargestellter Greifer, welcher sich über diesem Hubtisch befindet, die Karosse aufnehmen kann. Daraufhin wird der Hubtisch wieder abgesenkt und das fahrerlose Transportfahrzeug FTF kann aus dem Bereich 10 wieder ausgefahren werden und erneut in der Fertigung der einzelnen Karossen zur Verfügung stehen.
Bevor der nicht dargestellte Greifer sich mit der Karosse weiterbewegt, erfolgt vom Steuergerät eine Kontrolle, ob in einer nachgeordneten Fügestation FS ein leerer Ladungsträger Leer-LT vorhanden ist. Die Fügestation FS bildet die technische Schnittstelle zwischen der Anlieferung der Karossen aus dem Fertigungsprozess per FTF und dem Absetzen der Karossen in einen Ladungsträger als kleinste Versandeinheit. Zur Vorbereitung der Fügestation FS für die Aufnahme einer Karosse holt ein manuell gesteuerter Gabelstapler GST einen leeren Ladungsträger Leer-LT aus einem entsprechenden Puffer ab. Zur Bereitstellung von Ladungsträgern befinden sich in einem Bereich der Verladeanordnung mehrere Pufferplätze 15, 16, 17, 18 und 19, auf welchen leere Ladungsträger gestapelt sind. Die Ladungsträger, die im wesentlichen bereits aus DE 202 20 470 Ulbekannt sind, sind in Figur 4 in gestapelter Form mit abgeklappten Stützsäulen 20 dargestellt. Der genaue Aufbau soll hier nicht erläutert werden. Von diesen Pufferplätzen holt der Gabelstaplerfahrer jeweils einen Ladungsträger ab und setzt ihn in die Fügestation FS ein. Mittels Sensoren wird eine Korrektlage des Ladungsträgers in der Fügestation ermittelt und ein entsprechendes Freigabesignal ausgegeben. Sitzt der Ladungsträger korrekt in der Fügestation, so fährt der Gabelstapler zurück hinter eine Lichtschranke LS1. Damit befindet sich der Fahrer des Gabelstaplers nicht mehr in einem möglichen Schwenkbereich des Greifers für die Übernahme der Karosse vom FTF. Der Hubtisch HUB ist in der Zwischenzeit in die Übernahmeposition für den Greifer gefahren, wobei auch hier die obere Hubposition durch Lagesensoren bestätigt wird. Anschließend nimmt der Greifer die Karosse auf und fährt sie in die Position der Fügestation, wo er sie auf den Ladungsträger absetzt. Sitzt die Karosse auf dem Ladungsträger, öffnet der Greifer und gibt die Karosse frei. Neben der Grundfunktion des Greifens zum Umsetzen der Fertigkarosse vom FTF zum Ladungsträger soll der Greifer auch für den Fall zur Verfügung stehen, wenn Störungen bei der Karossenübernahme auftreten. In diesem Fall erfolgt ein Zurückheben der Karosse. Ist die Karosse an den Fügestationen übergeben, fährt der Greifer zurück und die Lichtschranke LS1 wird ausgeschaltet, was durch entsprechendes grünes Ampelsignal für den Gabelstapelfahrer signalisiert wird. Der Gabelstaplerfahrer GST fährt nun in diesen Bereich ein, nimmt den Ladungsträger mit daraufsitzender Karosse auf und fährt mit Ladungsträger und Karosse zu einer Stapelstation 12. Bevor der Gabelstapler den Ladungsträger in die Stapelstation 12 einsetzt, klappt er die seitlichen Stützsäulen 20 auf, die durch eine entsprechende Mechanik in dieser aufgeklappten Position arretiert werden.
Für das Abstellen der einzelnen Ladungsträger mit Karossen in der Stapelstation 12 sind verschiedene Bedingungen zu erfüllen. Zunächst muss geprüft werden, ob die Stapelstation in ihrer Grundstellung ist. In diesem Fall wird ein Freigabesignal ausgegeben und eine Lichtschranke LS2 inaktiv geschaltet, was wiederum durch ein Lichtsignal an den Gabelstaplerfahrer signalisiert wird. Gleichzeitig wird sichergestellt, dass ein Zuführwagen ZW nicht in den Bereich der Stapelstation einfährt. Dies kann beispielsweise durch eine dritte Lichtschranke LS3 erfolgen, welche beim Überfahren durch den Zuführwagen ZW ein Signal an die nicht dargestellte Steuereinheit ausgibt, so dass diese dann den Zuführwagen ZW stoppt. Der Gabelstapler GST kann nun in den Bereich der Stapelstation 12 einfahren und die erste Karosse mit ihrem Ladungsträger in der Stapelstation 12 einstellen. Wenn der Gabelstapler GST den Bereich wieder verlassen hat, und sich außerhalb der Lichtschranke LS2 befindet, ist dieser Bereich wieder in einem Sicherheitsmodus und das Stapelmodul 12 kann die erste Karosse anheben. Sobald sich der Ladungsträger mit der Karosse in der obersten Hubposition des Stapelmoduls befindet, kann ein weiterer Ladungsträger mit Karosse, welcher in der Zwischenzeit nach dem oben beschriebenen Ablauf von der Endposition 11 übernommen und vom Gabelstapler aus der Fügestation FS aufgenommen wurde, in die Stapelstation 12 eingesetzt werde. Wenn auch dieser Ladungsträger ordnungsgemäß in der Stapelstation sitzt, wird der zuerst eingesetzte und angehobene obere Ladungsträger abgesenkt, so dass sie passgenau aufeinander stehen. Die beiden Ladungsträger LT mit Karossen K korrekt bilden eine Ladeeinheit LE. Anschließend verlässt der Gabelstapler wieder den Sicherheitsbereich und befindet sich zwischen den Lichtschranken LS1 und LS2. Das Stapelmodul 12 ist in der Fig. 1 nur aus der Vogelperspektive dargestellt, so dass hier die einzelnen Hubbewegungen nicht zu erkennen sind.

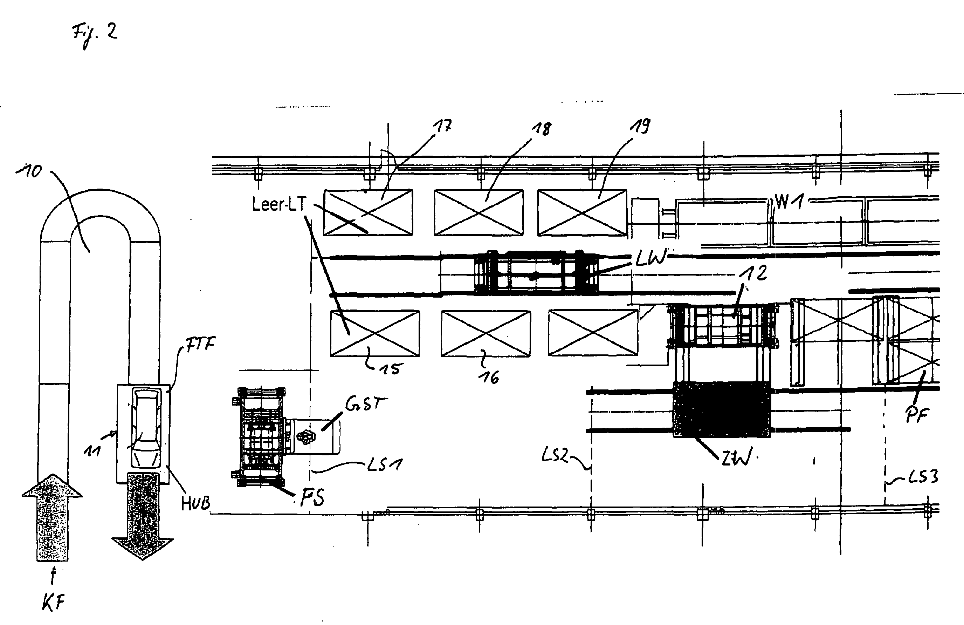

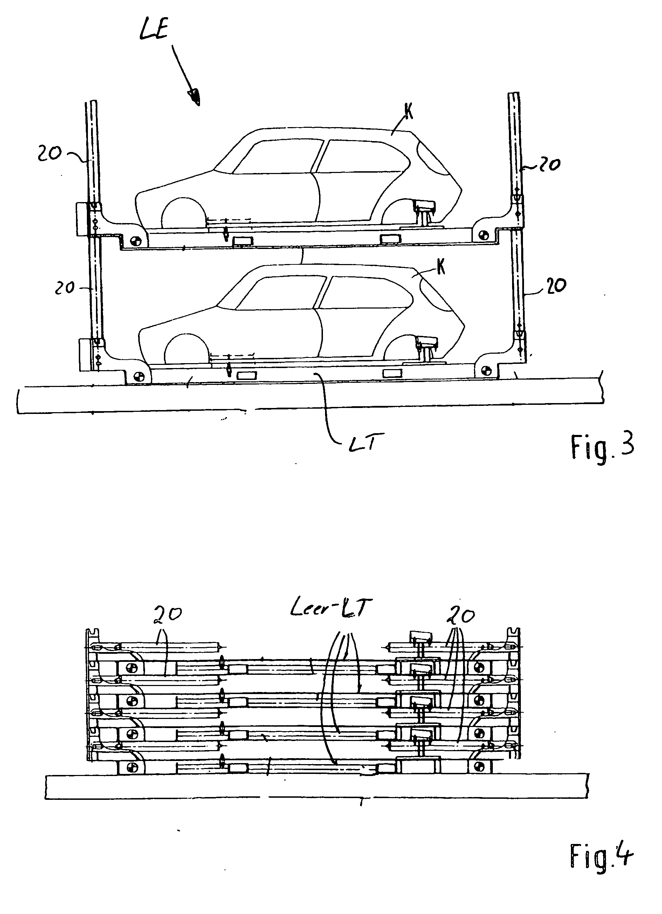

Der eben beschriebene Ablauf ist nochmals in Figur 2 dargestellt, wobei hier gleiche Vorrichtungen und Anordnungen mit gleichen Bezugszeichen versehen sind. Im Unterschied zu Figur 1 befindet sich hier der Gabelstapler in der Position vor der Fügestation FS zur Übernahme eines Ladungsträgers mit Karosse und der Zuführwagen ZW befindet sich gegenüber der Stapelstation 12 zur Aufnahme einer Ladungseinheit LE, wie sie in Figur 3 dargestellt ist. Je nach Transportfahrzeug können die seitlichen Stützsäulen 20 des oberen Ladungsträgers aufgeklappt werden, wie in der Figur 3 dargestellt oder auch im abgeklappten Zustand bleiben.

Diese Ladungseinheit LE wird von einem Zuführwagen ZW aus der Stapelstation abgeholt. Bedingung hierfür ist, dass die Lichtschranke LS2 aktiv geschaltet ist und der Gabelstapler sich nicht im Bereich befindet, in welchem sich der Zuführwagen bewegt. Der Zuführwagen selber läuft auf Schienen 13, die wie in der Figur 1 zu sehen ist, sich längs durch die gesamte Verladeanordnung erstrecken. Der Zuführwagen ZW fährt bis auf die Höhe der Stapelstation 12, so dass er in seiner Längsausrichtung neben der Stapelstation steht. Der Zuführwagen weist ein- und ausführbare Hubgabeln und Kettenförderer auf, wobei der Ladungsträger mittels der Hubgabeln unter den unteren Ladungsträger greift und die Ladungseinheit LE aus den beiden Ladungsträgern vertikal anhebt, so dass anschließend der Kettenförderer ein Zurückfahren der Ladungsträger auf den Zuführwagen möglich ist. Anschließend fährt der Zuführwagen ZW auf den Schienen bis zu einem freien Pufferplatz, von denen es im wesentlichen so viele gibt, wie anschleißend Waggons maximal beladen werden können. Die Pufferplätze sind in der Fig. 1 mit dem Bezugszeichen PF angegeben.
Der Zuführwagen ZW beginnt mit der Ablage der Ladungseinheit LE am von der Stapelstation 12 entferntesten Pufferplatz PF. Für den Fall, dass alle Pufferplätze leer sind, wäre dies der Pufferplatz PF1.
Parallel zu dem Zuführwagen ZW bewegt sich auf der gegenüberliegenden Seite der Pufferplätze ein Ladewagen LW. Dieser Ladewagen läuft ebenfalls auf Schienen. Alle Arbeitsschritte werden von einer Steuereinrichtung überwacht, die die augenblickliche Belegung der Pufferplätze kennt und die das Einfahren des aus mehreren geschlossenen Waggons W1, W2, W3, W4 und W5 bestehenden Zuges zum Beladen erfasst. Der Ladewagen LW hat die Funktion, nach dem Einfahren des Zuges und dem manuellen Öffnen der Waggontüren mittels einer Sensorik zu überprüfen, ob alle Waggons tatsächlich leer sind.

Da die Ladungsträger für den Transport der Karossen notwendig sind und mit den Karossen abtransportiert werden, werden gleichzeitig mit dem Zug die leeren, gestapelten Ladungsträger zurückgebracht. Der Ladewagen LW wird also gleichzeitig erfassen, in welchem der Waggons die übereinandergestapelten leeren Ladungsträger abgelegt sind. Bei seiner Rückfahrt von der Kontrolle der Waggons zu seinem Ausgangspunkt 14 wird er diese leeren Ladungsträger Leer-LT aus den Waggons entnehmen und entsprechend auf den dafür vorgesehenen Plätzen 15, 16, 17, 18 oder 19 ablegen.
Die Beladung der Waggons beginnt dann in der Art, dass die zuerst belegten Pufferplätze PF als erstes entladen werden und der zuletzt eingefahrene Waggon W5 als erstes beladen wird. Hierzu fährt der Ladewagen LW auf die Höhe des Puffers PF1, und ergreift die Ladeeinheit LE, wobei die Aufnahme wiederum über bekannte Hubwagen und Kettenförderer erfolgt. An dem Ladewagen selbst sind Sensoren vorgesehen, die beim Beladen die Höhe des Waggons und die mittige Ausrichtung des Ladewagens zum Waggon erfasst. Anschließend fährt der Ladewagen seine Ausleger so aus, dass über Kettenförderer die Ladeinheit in den Waggon eingefahren werden kann.

Es hat sich gezeigt, dass es vorteilhaft ist, alle Waggons zunächst von einer Seite, beispielsweise der rechten Seite, zu beladen und anschließend die Türen für alle Waggons in der Art zu schließen, dass nunmehr die linke Seite geöffnet wird. Nun erfolgt die Beladung der linken Seite der Waggons.

Dem Steuergerät ist jederzeit die aktuelle Position der einzelnen Ladungsträger mit Karossen, des Zuführwagens, des Ladewagens und der Waggons bekannt. Jede Karosse und jeder Waggon ist mit einem Transponder versehen, so dass über Sensoren die genaue Lage erfasst und zugeordnet werden kann. Es ist somit im Transportprotokoll genau bekannt, in welchem Waggon welche Karosse transportiert wird, so dass die Waggons bei einer späteren Entladung genau in der Reihenfolge, wie die Karossen für die Fertigung bereitgestellt werden sollen, zur Verfügung stehen.

Wie bereits oben ausgeführt, ist eine zentrale nicht explizit dargestellte Steuereinheit vorgesehen, die die einzelnen Ablaufschritte überwacht. Im Steuergerät sind für jede auszuführende Aktion verschieden Bedingungen und abgelegt, die jeweils erfüllt sein müssen, bevor eine weitere Aktion ausgelöst wird.
In der Figur 5 ist eine solche interne Abfrage im Steuersystem als Ablaufplan dargestellt, wobei dieser Ablaufplan im wesentlichen auf alle auszulösenden Arbeitsschritte anwendbar ist. Nach dem START wird zunächst im Schritt 21 abgefragt, ob der eine periphere Einheit, wie beispielsweise der Zuführwagen, sich in einem Schrittbetrieb befindet. Ist ein Schrittbetrieb aktiviert, dann wird im Arbeitsschritt 22 geprüft, ob eine Schrittfreigabe erfolgen soll. Ist dies nicht der Fall, wird zurückgesprungen zum Arbeitsschritt 21. Gleichzeitig wird, wenn in dem Arbeitsschritt 21 kein Schrittbetrieb aktiviert war, ebenso wie bei einer positiven Antwort auf die Abfrage 22, ob eine Schrittfreigabe erfolgt soll, in einem anschließendem Arbeitsschritt 23 die Bedingungen für eine Schrittfreigabe aus einem entsprechenden Speicherabschnitt im Steuersystem abgerufen, so dass in einer nachfolgenden Abfrage 24 geprüft werden kann, ob die Bedingungen für die Schrittfreigabe, beispielsweise ob sich im Bereich der Stapelstation kein Gabelstapelfahrer mehr befindet und in der Stapelstation zwei Ladungsträger mit Karossen zu einer Ladungseinheit LE zusammengefügt sind, gegeben sind. Ist dies der Fall, wird im Arbeitsschritt 25 der Schritt ausgeführt. Waren die Bedingungen nicht erfüllt, erfolgt im Arbeitsschritt 28 eine Fehlererkennung und der Schrittbetrieb wird gesperrt. Im Arbeitsschritt 26 des Ablaufplanes wird geprüft, ob der ausgeführte Schritt fertig ist. Ist dies der Fall , so wird anschließend im Arbeitsschritt 26 der nächste auszuführende Schritt eingeschaltet und das Programm beginnt erneut. Konnte im Arbeitsschritt noch keine vollständige Ausführung des auszuführenden Schrittes erkannt werden, dann springt das Verfahren zurück zum Arbeitsschritt 21.
Damit wird sichergestellt, dass eine Bewegung gestoppt wird, wenn während der Ausführung sich die Bedingungen ändern und es möglicherweise zur Gefährdung von Personen oder Gegenständen kommen kann.

## Patentansprüche

1. Anordnung zum Verladen von Fahrzeugkarossen (K) und dergleichen, wobei die montierten Karossen (K), welche stetig aus dem Fertigungsprozess zur Verladung bereitstehen, nach ihrer Endabnahme kontinuierlich abgenommen werden und zur Verladung vorbereitet werden, wobei mehrere verschiedene Stationen der Verladeanordnung aufeinander abgestimmt sind und von einer Steuereinheit überwacht werden, wobei die Karossen (K) von einem Endpunkt einer Endkontrolle mittels des Zusammenwirkens eines Hubtisches (HUB) und eines Greifers entnohmen und auf einen vorbereiteten Ladungsträger (LT) abgesetzt werden, wobei der Ladungsträger (LT) mit Karosse (K) mittels eines Gabelstaplers (GST) in eine Fügestation (FS) eingesetzt wird und wobei in der Fügestation (FS) zwei Ladungsträger (LT) mit Karossen (K) zu einer Ladeeinheit (LE) übereinandersgestapelt werden.

2. Anordnung nach Anspruch 1, **dadurch gekennzeichnet, dass** die Ladeeinheit (LE) in Wagons (W1 bis W5) eines Transportfahrzeuges (FTF) eingeladen werden, wobei ein verfahrbarer Zuführwagen (ZW) die Ladeeinheit aus der Fügestation (FS) mittels einer integrierter Hub- und Transportvorrichtung übernimmt und bis zum Einladen in das Transportfahrzeug (FTF) auf einen Pufferplatz (PF) zwischenlagert.

3. Anordnung nach Anspruch 2, **dadurch gekennzeichnet, dass** die Ladeeinheiten (LE) von einem verfahrbaren Ladewagen (LW) von dem Pufferplatz (PF) mittels einer integrierten Hub- und Transportvorrichtung aufgenommen und in einen Waggon (W1 bis W5) eingesetzt werden.

4. Anordnung nach einem der vorherigen Ansprüche, **dadurch gekennzeichnet, dass** alle Karossen (K) mit einer Identifikationsnummer versehen sind.

5. Anordnung nach Anspruch 3, **dadurch gekennzeichnet, dass** jeder Waggon (W1 bis W5) mit einer Identifikationsnummer versehen ist und somit jedem Waggon (W1 bis W5) genau die Karosse (K) zugeordnet werden kann, die in ihm eingeladen wird.

6. Anordnung nach einem der vorherigen Ansprüche, **dadurch gekennzeichnet, dass** die einzelnen Stationen der Verladeanordnung mittels einer zentralen Steuereinheit überwacht werden.

7. Anordnung nach Anspruch 1, **dadurch gekennzeichnet, dass** Lichtschranken (LS2) und Sensoren zur Erkennung von Endpositionen und zur Sicherung gefährlicher Bereiche vorgesehen sind.

## Claims

1. An arrangement for loading vehicle bodies (**K**) and the like, wherein the assembled bodies (**K**), which are constantly available for loading from the production process, are continuously removed after their final inspection and are prepared for loading, wherein a plurality of different stations of the loading arrangement are co-ordinated with one another and are monitored by a control unit, wherein the bodies (**K**) are removed from an end point of a final checking by means of the co-operation of an elevating platform (**HUB**) and a gripper and are deposited on a prepared loading carrier (**LT**), wherein the loading carrier (**LT**) with a body (**K**) is introduced into a joining station (**FS**) by means of a fork-lift truck (**GST**) and wherein two loading carriers (**LT**) with bodies (**K**) are stacked one above the other to form a loading unit (**LE**) in the joining station (**FS**).

2. An arrangement according to Claim 1, **characterized in that** the loading unit[s] (**LE**) are loaded into carriages (**W1** to **W5**) of a conveying vehicle (**FTF**), wherein a movable supply carriage (**ZW**) takes up the loading unit (**LE**) from the joining station (**FS**) by means of an integrated lifting and conveying device and stores it temporarily on a buffer space (**PF**) until loading into the conveying vehicle (**FTF**).

3. An arrangement according to Claim 2, **characterized in that** the loading units (**LE**) are received by a movable loading carriage (**LW**) from the buffer space (**PF**) by means of an integrated lifting and conveying device and are introduced into a carriage (**W1** to **W5**).

4. An arrangement according to any one of the preceding Claims, **characterized in that** all the bodies (**K**) are provided with an identification number.

5. An arrangement according to Claim 3, **characterized in that** each carriage (**W1** to **W5**) is provided with an identification number and, in this way, each carriage (**W1** to **W5**) can have associated with it in a precise manner the body (**K**) which is loaded in it.

6. An arrangement according to any one of the preceding Claims, **characterized in that** the individual stations of the loading arrangement are monitored by means of a central control unit.

7. An arrangement according to Claim 1, **characterized in that** light barriers (**LS2**) and sensors for detecting end positions and for making hazardous areas safe are provided.

## Revendications

1. Dispositif pour charger des carrosseries de véhicules (K) et similaires, les carrosseries (K) montées, qui sont disponibles constamment en provenance du processus de fabrication pour le chargement, étant réceptionnées de façon continue après leur réception finale et étant préparées pour le chargement, plusieurs stations différentes du dispositif de chargement étant harmonisées entre elles et étant contrôlées par une unité de commande, les carrosseries (K) étant enlevées d'un point final d'un contrôle final au moyen de l'action conjuguée d'une table de levage (LEVAGE) et d'une pince et étant déposées sur un support de charge (LT) préparé, le support de charge (LT) étant inséré avec la carrosserie (K) au moyen d'un chariot élévateur (GST) dans une station d'assemblage (FS) et deux supports de charge (LT) étant empilés l'un sur l'autre avec des carrosseries (K) pour former une unité de chargement (LE) dans la station d'assemblage (FS).

2. Agencement selon la revendication 1, **caractérisé en ce que** les unités de charge (LE) sont chargées dans des wagons (W1 à W5) d'un véhicule de transport (FTF), un chariot d'alimentation (ZW) déplaçable (ZW) réceptionnant l'unité de charge (LE) à la sortie de la station d'assemblage (FS) au moyen d'un dispositif de levage et de transport intégré et la stockant provisoirement jusqu'au chargement dans le véhicule de transport (FTF) en un emplacement tampon (PF).

3. Dispositif selon la revendication 2, **caractérisé en ce que** les unités de charge (LE) sont réceptionnées par un chariot de chargement (LW) déplaçable sur l'emplacement tampon (PF) au moyen d'un dispositif de levage et de transport intégré et sont introduites dans un wagon (W 1 à W5).

4. Dispositif selon l'une quelconque des revendications précédentes, **caractérisé en ce que** toutes les carrosseries (K) sont dotées d'un numéro d'identification.

5. Dispositif selon la revendication 3, **caractérisé en ce que** chaque wagon (W1 à W5) est doté d'un numéro d'identification et de ce fait précisément la carrosserie (K), qui est chargée dans le wagon, peut être attribuée à chaque wagon (W1 à W5).

6. Dispositif selon l'une quelconque des revendications précédentes, **caractérisé en ce que** toutes les stations individuelles du dispositif de chargement sont contrôlées au moyen d'une unité de commande centrale.

7. Dispositif selon la revendication 1, **caractérisé en ce que** des barrières lumineuses (LS2) et des capteurs sont prévus pour la détection de positions finales et pour la sécurisation de zones dangereuses.
